(19) **Europäisches Patentamt / European Patent Office / Office européen des brevets**

(11) **EP 4 150 531 B1**

(12) # EUROPEAN PATENT SPECIFICATION

(45) Date of publication and mention of the grant of the patent:
**25.02.2026 Bulletin 2026/09**

(21) Application number: **20767887.1**

(22) Date of filing: **03.06.2020**

(51) International Patent Classification (IPC):
**G06N 3/0495** *(2023.01)*    **G06N 3/09** *(2023.01)*

(52) Cooperative Patent Classification (CPC):
**G06N 3/0495; G06N 3/09**

(86) International application number:
**PCT/RU2020/000263**

(87) International publication number:
**WO 2021/246892 (09.12.2021 Gazette 2021/49)**

(54) **METHOD FOR TRAINING AN ARTIFICIAL NEURAL NETWORK COMPRISING QUANTIZED PARAMETERS**

VERFAHREN ZUM TRAINIEREN EINES KÜNSTLICHEN NEURONALEN NETZES MIT QUANTISIERTEN PARAMETERN

PROCÉDÉ DE FORMATION D'UN RÉSEAU NEURONAL ARTIFICIEL COMPRENANT DES PARAMÈTRES QUANTIFIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.03.2023 Bulletin 2023/12**

(73) Proprietor: **Huawei Technologies Co., Ltd.**
**Longgang District,**
**Shenzhen,**
**Guangdong 518129 (CN)**

(72) Inventors:
- **CHIKIN, Vladimir Maximovich**
  **Shenzhen, Guangdong 518129 (CN)**
- **TELEGINA, Anna Dmitrievna**
  **Shenzhen, Guangdong 518129 (CN)**
- **GLUKHOV, Valery Nikolaevich**
  **Shenzhen, Guangdong 518129 (CN)**
- **SOLODSKIKH, Kirill Igorevich**
  **Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
- **AHMED T ELTHAKEB ET AL: "SinReQ: Generalized Sinusoidal Regularization for Low-Bitwidth Deep Quantized Training", ARXIV.ORG, CORNELL UNIVERSITY LIBRARY, 201 OLIN LIBRARY CORNELL UNIVERSITY ITHACA, NY 14853, 4 May 2019 (2019-05-04), XP081542586**

**Description**

TECHNICAL FIELD

Aspects of the present disclosure relate, in general, to methods for training an artificial neural network and more particularly, although not exclusively to method for providing a quantized neural network.

BACKGROUND

Deep neural networks show promising results in various computer vision tasks as well as many other fields. However, deep learning models usually contain many layers and a large number of parameters and can therefore use a large amount of resources during their training (repeated forward and backward propagation) as well as inference (forward propagation), which ultimately limits their application on edge devices such as hardware limited devices that are positioned logically at the edge of a telecommunication network. For example, using a trained deep neural network model for predictions involves computations consisting of multiplications of real-valued weights by real-valued activations in a forward pass. These multiplications are computationally expensive as they comprise floating point to floating point operations, which may prove intractable or impracticable to perform on resource limited devices where computational resource and memory are at a premium.

To alleviate this problem, a number of approaches have been proposed to quantize deep neural network (DNN) models in order to enable acceleration and compression of the models. That is, in order to decrease the storage and compute requirements of a model during inference it is possible for some of its parameters, such as weights or/and activations, to be stored as integers with a low number of bits. For example, instead of 32-bit (4 bytes) floating point numbers, 8-bit integers (1 byte) may be used. The process of converting model parameters from "continuous" floating point to discrete integer numbers is called quantization.

Quantization of DNN models by reducing the bit-width of weights and/or activations enables multiple memory reductions. Such quantized DNNs use less storage space and are more easily distributed over resource-limited devices. Furthermore, arithmetic with lower bit-width numbers is faster and cheaper. Since floating-point calculations are computationally intensive and may not always be supported on the microcontrollers of some ultra low-power embedded devices, quantized DNN models may also be advantageously deployed on edge devices comprising reduced resource. For example, 8-bit fixed-point quantization DNNs have become widely used in industrial projects and are supported in the most common frameworks for DNN training and inference.

However, despite the advantages of quantization, the accuracy and quality of quantized DNNs can suffer in comparison with DNNs that use relatively higher bit-width parameters utilising 16-bit or 32-bit floating point arithmetic. Furthermore, the use of relatively lower bit-width parameters can trigger a requirement to either fine-tune a model in order to compensate for the reduction in granularity with which parameters may be represented, or retrain it from scratch, thus leading to increased use of resources and downtime.

Ahmed T Elthakeb et al ("SinReQ: Generalized Sinusoidal Regularization for Low-Bitwidth Deep Quantized Training", retrieved: 30-06-2023, arXiv.org, Cornell University Library, 4 May 2019) discloses deep quantization of neural networks for reducing their compute and storage cost, wherein to mitigate accuracy loss from quantization, a sinusoidal regularization, called SinReQ1, is proposed for use in deep quantized training.

SUMMARY

The invention has been defined in the independent claims. Further specific technical features have been defined in the dependent claims.

According to a first aspect, there is provided a method for training an artificial neural network comprising multiple nodes each defining a quantized activation function configured to output a quantized activation value, the nodes arranged in multiple layers, in which nodes in adjacent layers are connected by connections each defining a quantized connection weight function configured to output a quantized connection weight value, the method comprising minimising a loss function, the loss function comprising a scalable regularisation factor defined by a differentiable periodic function configured to provide a finite number of minima selected on the basis of a quantisation scheme for the neural network, whereby to constrain a connection weight value to one of a predetermined number of values of the quantisation scheme.

The differentiable periodic function forms a smooth quantization regularization function for training quantized neural networks. The function is so defined as to push or constrain weight and activation values of a neural network to a selected quantization grid according to quantization parameters representing scale parameters for weights and/or hidden inputs of the network. Advantageously, a model can therefore be quantized to any bit-width precision, and no special implementation measures are required in order to apply the method using existing architectures.

Each of the minima of the periodic function coincide with a value of the quantisation scheme, which itself defines a number of integer bits.

The differentiable periodic function can be used as part of a regularization term in a loss calculation in order to push values of weights/activations to a set of discrete points during training.

Using the loss function, each quantized activation value is constrained to one of a predetermined number of values of the quantisation scheme. In an implementation of the first aspect, each quantized connection weight value is tuned, e.g. varied or modified, and the loss function is minimised using a gradient descent mechanism. This process can be iteratively performed until the loss function is minimised.

**BRIEF DESCRIPTION OF THE DRAWINGS**

Figure 1 is a schematic representation of a smooth quantization regularizer function according to an example;
Figure 2 is a schematic representation of a method according to an example;
Figure 3 is a schematic representation of a method according to an example; and
Figure 4 is a schematic representation of a processor associated with a memory of an apparatus according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Quantization techniques enable reductions in memory and computational costs in DNN models. However, without using specialized tricks for training and optimization, model accuracy and quality can be degraded. Typically, the optimisation of models by way of quantization cannot be generalized to arbitrary tasks due to the specific approaches used. For example, approaches to reduce the bit width of the values of weights and activations may rely on schemes that maps a range of the distribution of parameter values to the range of a quantization grid which depends on the bit width. Although such approaches can reduce memory and computational cost, they rely on keeping full-precision floating point weights during training for backpropagation. Thus, during training a comparatively large amount of memory is still required.

Accordingly, approaches for enabling the deployment of DNNs over a larger set of devices that may be computationally limited are based either on specific training quantization algorithms or on the use of additional loss functions which are added to a main loss function in order to minimize the difference between full-precision weights and/or activations of DNNs and their quantized analogues. As noted, specific settings or selections made as part of a training process are needed in order to enable such approaches to be compatible with different models. Existing methods cannot therefore be generalized to arbitrary tasks.

According to an example, a general quantization mechanism is provided in which a smooth quantization regularization function for training quantized neural networks is provided. The function is smooth and differentiable, and naturally pushes the weight and activation values of a DNN closer to a selected quantization grid according to quantization parameters. It is therefore possible to enable quantization of a model to any bit-width precision. The mechanism does not depend on network architecture and can be applied to any existing supervised problems (such as classification, regression, speech synthesis, etc.).

In an implementation, the function is used as part of a regularization term in a loss calculation in order to push values of weights/activations to a set of discrete points during training. The function has a limited number of minima that can correspond to a selected quantization scheme, which means that values for weights (and/or activations) can be constrained within a desired range.

In order to build a framework for the definition of a smooth quantization regularization (SQR) function according to an example, some preliminary explanations are provided. Firstly, it is possible to define a standard uniform quantization round on a uniform grid of integers from segment $[n_1; n_2]$ by $Q_U(x)$ such that:

$$\mathrm{Q_U}(x) = \begin{cases} \left\lfloor x + \frac{1}{2} \right\rfloor, & \text{if } n_1 \leq x \leq n_2 \\ n_1, & \text{if } x < n_1 \\ n_2, & \text{if } x > n_2 \end{cases}$$

A similar function can be defined for $\overline{x} \in \mathbb{R}^k$. It is assumed that the function $Q_U$ is applied to each component of the vector $\overline{x}$. Note that $\| \cdots \|$ as used herein refers to the Euclidean norm.

The mean squared quantization error (MSQE) of vector $\overline{x} \in \mathbb{R}^k$, $k \geq 1$ on a uniform grid of integers from segment $[n_1; n_2]$ can be denoted:

$$\mathrm{MSQE}\,(\overline{x}) = \frac{1}{k} \| \overline{x} - Q_U(\overline{x}) \|^2$$

In practice, layers of a neural network commute with scalar multiplication, so to perform layer evaluation using integer arithmetic layers can be evaluated using rounded scaled weights and input activations and then determining the inverse of the scaling.

Therefore, instead of minimizing $\mathrm{MSQE}\,(\overline{x})$ it is necessary to minimize:

$$\mathrm{MSQE}(\overline{x}, s) = s^2\, \mathrm{MSQE}\left(\frac{\overline{x}}{s}\right) = \frac{1}{k} \| \overline{x} - s\mathrm{Q_U}\left(\frac{\overline{x}}{s}\right) \|^2$$

by setting the scale factor s. Generally speaking, the weights of each quantized block of a model and each quantized activation layer have their own scale factors. In some cases, individual rows of weight matrices or convolution filters have their own scale factors, in which case they can be considered as individual quantized blocks.

In the case of a neural network quantization mechanism, $\{W_i, s_{w_i}\}_{i=1}^n$ can represent the weights tensors ($W_i$) of quantized blocks of the model and their scale factors ($s_{w_i}$), and $\{A_j, s_{a_j}\}_{j=1}^m$ can represent the quantized activation layers ($A_j$) of the model and their scale factors ($s_{a_j}$). The set of weights tensors of quantized blocks can be denoted $\overline{W}$, whilst the vector consisting of scale factors $s_{w_i}$ can be denoted as $\overline{s}_w$ and the vector consisting of scale factors $s_{a_j}$ of quantized activation layers can be denoted by $\overline{s}_a$.

Let $\xi$ be the input data distribution, and $F(\overline{W}, \overline{s}_w, \overline{s}_a, x)$ be the function that the quantized model defines on sample x. That is, according to an example, the quantized model performs calculations using tensor $s_{w_i} Q_U\left(\frac{W_i}{s_{w_i}}\right)$ instead of using the weight tensor $W_i$ of each quantized block, and using tensor $s_{a_j} Q_U\left(\frac{A_j(x)}{s_{a_j}}\right)$ instead of the tensor $A_j(x)$ of each quantized activation layer on sample x. In fact, the tensor $A_j(x)$ of each activation layer also depends on $\overline{W}, \overline{s}_w$ and $\overline{s}_a$: $A_j(x) = A_j(x, \overline{W}, \overline{s}_w, \overline{s}_a)$.

The MSQE of weights of a quantized model can be defined, in an example, as:

$$\mathrm{MSQE}_w = \sum_{i=1}^n \mathrm{MSQE}\,(W_i, s_{w_i})$$

and the MSQE of activations of the quantized model for an input data distribution $\xi$ can be denoted by:

$$\mathrm{MSQE}_a = \sum_{j=1}^{m} \mathrm{E}\left[\mathrm{MSQE}\left(A_j(\xi, \overline{W}, \overline{s}_w, \overline{s}_a), s_{a_j}\right)\right]$$

If $L(F(x, \overline{W}, \overline{s}_w, \overline{s}_a))$ is the value of the base loss function on a sample of data x, then the neural network quantization problem can be represented as:

$$\mathrm{E}[L(F(\xi, \overline{W}, \overline{s}_w, \overline{s}_a))] \to \min_{\Omega}$$

where $\Omega$ is some region of parameters $(\overline{W}, \overline{s}_w, \overline{s}_a)$ of limited quantization errors $\mathrm{MSQE}_w$ and $\mathrm{MSQE}_a$.

According to an aspect, for a class of smooth functions $\phi$ that will be defined and discussed in more detail below, the above minimisation problem reduces to finding:

$$\mathrm{E}\left[L\left(F(\xi, \overline{W}, \overline{s}_w, \overline{s}_a)\right)\right] + \lambda_w \sum_{i=1}^{n} s_{w_i}^2 \phi\left(\frac{W_i}{s_{w_i}}\right) + \lambda_a \sum_{j=1}^{m} \mathrm{E}\left[s_{a_j}^2 \phi\left(\frac{A_j(\xi)}{s_{a_j}}\right)\right] \to \min$$

in the domain of parameters $(\overline{W}, \overline{s}_w, \overline{s}_a)$.

According to an example, a function $\phi(x)$ can be defined as a smooth quantization regularization (SQR) function for the uniform grid of integers from segment $[n_1; n_2]$ when the following holds:

1. Functions $\phi(x)$ and the mean squared quantization error (MSQE), MSQE(x), define the same order on the regions $[n_1; n_2]$ and $(-\infty, n_1] \cup [n_2, +\infty)$. That is, if $x_1$ and $x_2$ simultaneously lie in $[n_1; n_2]$, or $(-\infty, n_1] \cup [n_2, +\infty)$ then:

$$\mathrm{MSQE}(x_1) \leq \mathrm{MSQE}(x_2) \Leftrightarrow \phi(x_1) \leq \phi(x_2),$$

2. There exists $a, b \in \mathbb{R}$, $0 < a < b$ such that $a\mathrm{MSQE}(x) \leq \phi(x) \leq b\mathrm{MSQE}(x)$ for any $x \in \mathbb{R}$, and

3. Function $\phi(x)$ is smooth, such that: $\phi(x) \in C^2(\mathbb{R})$.

The value of $\phi(z)$ on the vector $\overline{x} = (x_1, \ldots, x_k) \in \mathbb{R}^k$ can be defined as the sum of the values of $\phi$ from the components of the vector $\overline{x}$:

$$\phi(\overline{x}) = \sum_{i=1}^{k} \phi(x_i)$$

It is therefore clear that $\phi(\overline{x})$ satisfies the relation a $a\mathrm{MSQE}(x) \leq \phi(x) \leq b\mathrm{MSQE}(x)$ for any $\overline{x} \in \mathbb{R}^k$.

Thus, for any $a, b \in \mathbb{R}$, $0 < a < b$ there exists an SQR function $\phi(x)$ such that $a\mathrm{MSQE}(x) \leq \phi(x) \leq b\mathrm{MSQE}(x)$.

Furthermore, SQR functions as defined herein according to example possess the natural properties of a quantization error - that is, the same number of minima, symmetry with respect to grid points and an equal rights of grid points.

Thus, an SQR, $\phi(x)$, according to an example, possesses:

1. $n_2 - n_1 + 1$ roots - integers from segment $[n_1; n_2]$, all of which are global minima of the function (and note that the function does not have other local minima).
2. is periodic on the segment $[n_1; n_2]$ with period 1.

3. is even on the segment $\left[r - \frac{1}{2}, r + \frac{1}{2}\right]$ for every root r except $n_1$ and $n_2$: $\phi(r-x) = \phi(r+x)$ for any $x \in \left[-\frac{1}{2}, \frac{1}{2}\right]$ where $\phi$ $(r) = 0, r \neq n_1, n_3$.

Furthermore, for an SQR, $\phi(x)$, according to an example for which $a\mathrm{MSQE}(x) \leq \phi(x) \leq b\mathrm{MSQE}(x)$ for some

$a, b \in \mathbb{R}$ , $0 < a < b$, $a\,\mathrm{MSQE}\,(\overline{x}, s) \leq s^2 \phi(\frac{\overline{x}}{s}) \leq b\,\mathrm{MSQE}\,(\overline{x}, s)$ for any $s > 0$ and $\overline{x} \in \mathbb{R}^k$ , and for an SQR, $\phi(x)$,

according to an example for which $s > 0$ , there is $C > 0$ such that $s^2 \phi(\frac{\overline{x}}{s}) = C\,\mathrm{MSQE}\,(\overline{x}, s) + o(\mathrm{MSQE}\,(\overline{x}, s))$ for:

$$\mathrm{MSQE}(\overline{x}, s) \to 0, \text{ and } s^2 \phi\left(\frac{\overline{x}}{s}\right) = O(\mathrm{MSQE}(\overline{x}, s)) \text{ for } \| \overline{x} \| \to \infty, \overline{x} \in \mathbb{R}^k.$$

The goal of quantization is to minimize a quantization norm, because it reflects a value of rounding error. MSQE is a quantization norm but is not differentiable and its behaviour at the points of discontinuity of the derivative thereof makes it difficult to move between the minima. As a result, it is a poor target functional for the optimization problem. On the contrary, an SQR function as defined above can be used to optimize a model loss function using, e.g., a gradient descent algorithm, since it is differentiable and has a preselected number of minima in a range [n$_1$, n$_2$].

Accordingly, for any SQR $\phi(x)$ for which $\mathrm{MSQE}\,(x) \leq \phi(x) \leq b\,\mathrm{MSQE}\,(x)$ for some $a, b \in \mathbb{R}$, $0 < a < b$ and for any $\lambda_w$, $\lambda_a > 0$, each solution to the optimization problem:

$$\mathrm{E}\left[L\left(F(\xi, \overline{W}, \overline{s}_w, \overline{s}_a)\right)\right] + \lambda_w \sum_{i=1}^{n} s_{w_i}^2 \phi\left(\frac{W_i}{s_{w_i}}\right) + \lambda_a \sum_{j=1}^{m} \mathrm{E}\left[s_{a_j}^2 \phi\left(\frac{A_j(\xi)}{s_{a_j}}\right)\right] \to min$$

in the domain of parameters ($\overline{W}$, $\overline{s}_w$, $\overline{s}_a$) is a solution to optimization problem:

$$\mathrm{E}[L(F(\xi, \overline{W}, \overline{s}_w, \overline{s}_a))] \to \underset{\Omega}{min}$$

in some region $\Omega$ of parameters ($\overline{W}$, $\overline{s}_w$, $\overline{s}_a$) defined by parameters *a*, *b*, $\lambda_w$ and $\lambda_a$, where for some $C(\lambda_w, \lambda_a) > 0$:

$$\left\{\lambda_w \mathrm{MSQE}_w + \lambda_a \mathrm{MSQE}_a \leq \frac{C(\lambda_w, \lambda_a)}{b}\right\} \subset \Omega$$

and,

$$\Omega \subset \left\{\lambda_w \mathrm{MSQE}_w + \lambda_a \mathrm{MSQE}_a \leq \frac{C(\lambda_w, \lambda_a)}{a}\right\}$$

Region $\Omega$ contains all the points at which the weighted sum of squared quantization errors $\lambda_w \mathrm{MSQE}_w + \lambda_a \mathrm{MSQE}_a$ is less or equal than $\frac{C(\lambda_w, \lambda_a)}{b}$ , while in region $\Omega$ the weighted sum $\lambda_w \mathrm{MSQE}_w + \lambda_a \mathrm{MSQE}_a$ does not exceed $\frac{C(\lambda_w, \lambda_a)}{\sim}$ .

Thus, according to an example, selection of values for the parameters *a*, *b*, $\lambda_w$ and $\lambda_a$ enables adjustment of the width of the channel $\left[\frac{C(\lambda_w, \lambda_a)}{b}, \frac{C(\lambda_w, \lambda_a)}{a}\right]$ .

Thus, by minimizing a smooth function according to:

$$\mathrm{E}\left[L\left(F(\xi, \overline{W}, \overline{s}_w, \overline{s}_a)\right)\right] + \lambda_w \sum_{i=1}^{n} s_{w_i}^2 \phi\left(\frac{W_i}{s_{w_i}}\right) + \lambda_a \sum_{j=1}^{m} \mathrm{E}\left[s_{a_j}^2 \phi\left(\frac{A_j(\xi)}{s_{a_j}}\right)\right]$$

the minima of $E[L(F(\xi, \overline{W}, \overline{s}_w, \overline{s}_a))]$ in the region of a limited number of quantization errors $\mathrm{MSQE}_w$ and $\mathrm{MSQE}_a$ can be obtained. Note that a similar proposition for the function MSQE is not true since it not differentiable.

The scale factors, $s_{w_i}$, $s_{a_j}$ are trainable parameters which automatically tune the grid scale to specific tensors. The multipliers, $\lambda_w$, $\lambda_a$ control the strength of regularization. As the SQR function $\phi$ is $C^2(\mathbb{R})$ it enables a quantized neural network to be learnt or tuned using 2nd order optimization methods as 1st order methods. In an example, scale factors for activations can be initialized by sample statistics from training data. Scale factors for weights are initialized using current maximum absolute value of weights. Note that, in an example, weights are quantized on a forward pass during training.

An SQR function according to an example for two fixed integers $n_1$ and $n_2$, where $n_1 < n_2$, and any $x \in \mathbb{R}$ is:

$$\mathrm{Qsin}(x) = \begin{cases} \sin^2(\pi x), & \text{if } n_1 \leq x \leq n_2 \\ \pi^2(x - n_1)^2, & \text{if } x < n_1 \\ \pi^2(x - n_2)^2, & \text{if } x > n_2 \end{cases}$$

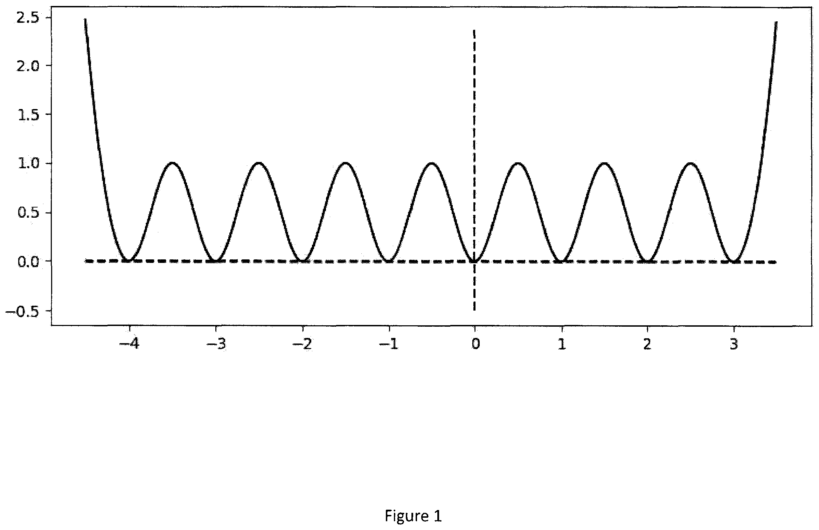

Figure 1 is a schematic representation of the function Qsin(x) noted above for $n_1$ = -4 and $n_2$ = 3. The function defined above is smooth, and the proper choice of $n_1$ and $n_2$ enables quantization of a model to any bit precision. For example, selecting $n_1$ = -128 and $n_2$ = 127 an int8 scheme is obtained, whereas selecting $n_1$ = 0 and $n_2$ = 255 an uint8 scheme is obtained. Furthermore, it can be seen that a 1-bit scheme (Qsin$_{\text{bin}}$) and triple scheme (Qsin$_{\text{triple}}$)can be obtained, which are also $C^2(\mathbb{R})$ , as follows:

$$\mathrm{Qsin}_{\mathrm{bin}}(x) = \begin{cases} \sin^2\left(\frac{\pi(x-1)}{2}\right), & -1 < x < 1 \\ \frac{\pi^2}{4}(x+1)^2, & x \leq -1 \\ \frac{\pi^2}{4}(x-1)^2, & x \geq 1 \end{cases}$$

$$\mathrm{Qsin}_{\mathrm{triple}}(x) = \begin{cases} \sin^2(\pi x), & -1 < x < 1 \\ \pi^2(x+1)^2, & x \leq -1 \\ \pi^2(x-1)^2, & x \geq 1 \end{cases}$$

Thus, according to an example, given a neural network with floating points weights, a corresponding network which uses integer weights and inner activations (hidden inputs) can be constructed using smooth quantization regularizers (SQR) such as described above (of which Qsin is an example).

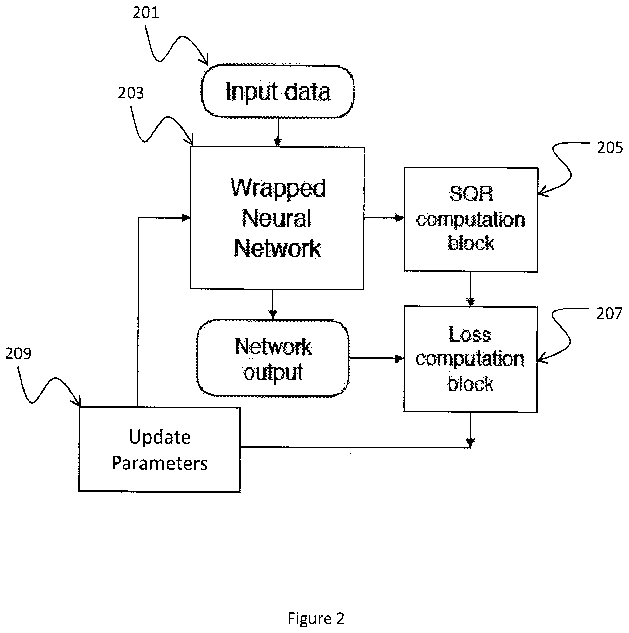

Figure 2 is a schematic representation of a method according to an example. Input data 201 representing neural network with, e.g., floating point parameters such as weights and activation values and so on. In block 203, the input data is used in order to wrap each layer of the neural network by adding scale parameters for the weights, scale parameters for hidden inputs and adding a local SQR computation block.

In block 205, a global accumulation SQR block is set that is configured to collect SQR values for weights and hidden inputs from each layer of the neural network. In block 207, the loss function with SQR (as described above) is calculated and gradients are computed for the neural network weights and new parameters (scale parameters).

In block 209 all parameters are updated by the gradient step. When minimising the SQR value (i.e. training the network) weights that are closer and closer to integer values are obtained and this means that evaluation of the neural network becomes iteratively closes to integer evaluation. Finally, in an example, weights (and activations etc.) can be round to nearest integer values.

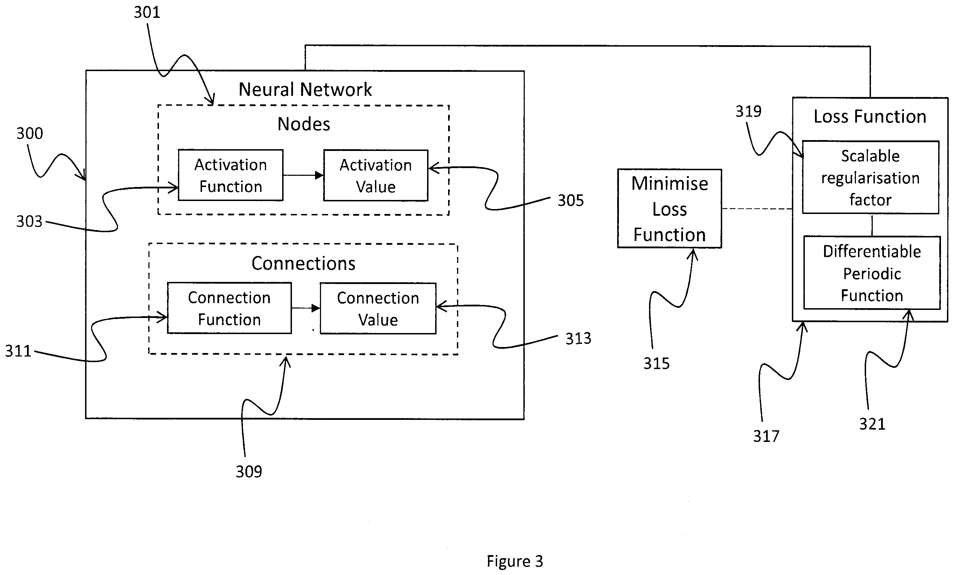

Figure 3 is a schematic representation of a method according to an example. In the example of figure 3, an artificial neural network 300 comprises multiple nodes 301 each defining a quantized activation function 303 configured to output a quantized activation value 305, the nodes 301 are arranged in multiple layers, in which nodes in adjacent layers are connected by connections 309 each defining a quantized connection weight function 311 configured to output a quantized connection weight value 313. In block 315, a loss function 317 comprising a scalable regularisation factor 319 defined by a differentiable periodic function 321 configured to provide a finite number of minima is minimised. The loss function 317 is selected on the basis of a quantisation scheme for the neural network 300, whereby to constrain a connection weight value 313 to one of a predetermined number of values of the quantisation scheme. More particularly, the differentiable periodic function 321 is constructed so as to define a finite number of minima that can be used as part of a regularization term in a loss calculation in order to push values of weights/activations to a set of discrete points during training. Accordingly, since the function has a limited number of minima that correspond to the selected quantization scheme, weights (or activations) can be constrained within a desired range.

Therefore, a method for training an artificial neural network comprising multiple nodes each defining a quantized activation function configured to output a quantized activation value, in which the nodes are arranged in multiple layers, and in which nodes in adjacent layers are connected by connections each defining a quantized connection weight function configured to output a quantized connection weight value, can proceed by minimising a loss function, the loss function comprising a scalable regularisation factor defined by a differentiable periodic function configured to provide a finite number of minima selected on the basis of a quantisation scheme for the neural network, whereby to constrain a connection weight value to one of a predetermined number of values of the quantisation scheme. As described above, the differentiable periodic function can be an SQR function, such as the Qsin function. Selection of parameters for the function enables the construction of a framework that defines a desired bit width for the training mechanism, such as uint8, int8 and so on, as described above, such that a network with floating points parameters can be used as the basis for construction of a corresponding (that is, the same) neural network which uses integer weights and inner activations (hidden inputs).

With reference to figure 1 for example, a quantisation method according to an example can therefore be used to constrain a parameter for a neural network to one of a number of integer bits defining a selected quantisation scheme as part of a regularisation process. A quantisation scheme is defined according to the selection of the parameters of the differentiable periodic function that goes to make up the scalable regularisation factor. Thus, in the example of figure 1, the quantisation scheme defines a finite number of minima of the differentiable periodic function that are aligned according to the selected quantisation scheme. Accordingly, as part of a regularisation process in which a loss function that is regulated by the differentiable periodic function, parameters will converge to integer values as part of a minimisation process. Finally, integer values can be selected based on the closest integer for a parameter.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

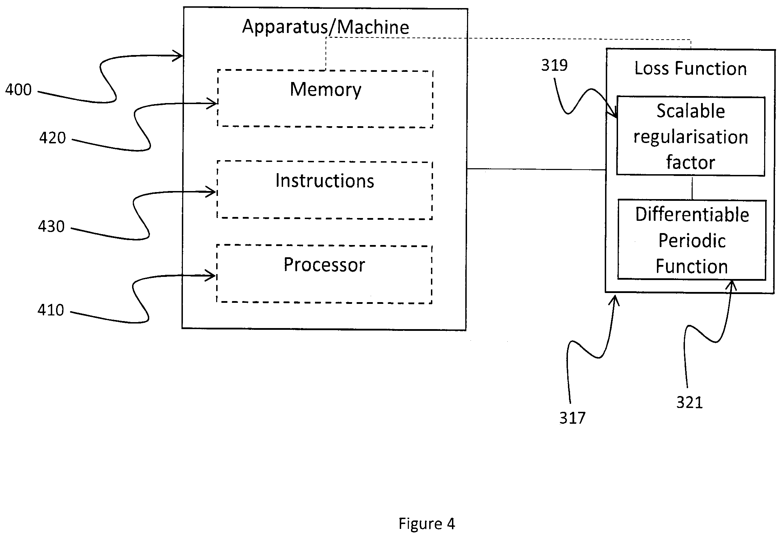

Figure 4 is a schematic representation of a processor associated with a memory according to an example. In the example of figure 4, the memory 420 comprises computer readable instructions 430 which are executable by the processor 410. The instructions 430 can be used to minimise a loss function comprising a scalable regularisation factor defined by a differentiable periodic function configured to provide a finite number of minima selected on the basis of a quantisation scheme for the neural network, whereby to constrain a connection weight value to one of a predetermined number of values of the quantisation scheme. That is, when executed by processor 410, the instructions 430 can cause apparatus 400 to perform operations whereby to minimise the loss function. The instructions 430 can also cause apparatus 400 to perform operations whereby to adjust a weight scale parameter of the differentiable periodic function, the weight scale parameter representing a scale factor for a weight value of a weight function defining a connection between nodes of the neural network, and compute a value for the loss function on the basis of the adjusted weight scale parameter. Furthermore, instructions 430 can be provided to adjust an activation scale parameter of the differentiable periodic function, the activation scale parameter representing a scale factor for an activation value of a activation function of a node of the neural network, and compute a value for the loss function on the basis of the adjusted activation scale parameter, and to compute a value of the loss function by performing a gradient descent calculation.

Accordingly, such machine-readable instructions may be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams, such as block 315 for example or those function specified with reference to figure 2.

Further, the teachings herein may be implemented in the form of a computer software product, the computer software product being stored in a storage medium and comprising a plurality of instructions for making a computer device implement the methods recited in the examples of the present disclosure.

The scope of protection is defined by the appended claims.

## Claims

1. A computer implemented method for training an artificial neural network (300) comprising multiple nodes (301) each defining a quantized activation function (303) configured to output a quantized activation value (305), the nodes arranged in multiple layers, in which nodes in adjacent layers are connected by connections (309) each defining a quantized connection weight function (311) configured to output a quantized connection weight value (313), the method comprising:

   minimising a loss function (317), the loss function comprising a scalable regularisation factor (319) defined by a differentiable periodic function (321) configured to provide a finite number of minima selected on the basis of a quantisation scheme for the neural network, whereby to constrain each connection weight value to one of a predetermined number of values of the quantisation scheme;
   wherein the minimising a loss function (317) comprises:

      using the loss function (317), constraining each quantized activation value (305) to one of a predetermined number of values of the quantisation scheme; and
      tuning each quantized connection weight value (313); and
      minimising (315) the loss function (317) using a gradient descent mechanism;

   wherein quantization parameters comprise scale factors for the activations and scale factors for the weights, wherein the scale factors for the weights are initialized using current maximum absolute value of the weights, wherein each of the minima of the periodic function (321) coincide with a value of the quantisation scheme, and wherein the quantisation scheme defines a number of integer bits.

2. A non-transitory machine-readable storage medium encoded with instructions (430) for training an artificial neural network (300), the instructions, when executed by a processor (410) of a machine (400), cause the machine (400) to perform a method according to claim 1.

3. A computer program product comprising instructions (430) for training an artificial neural network (300) which, when the program is executed by a computer, cause the computer to carry out the steps of the method of claim 1.

4. A data processing device comprising a processor configured to perform the steps of the method of claim 1.

## Patentansprüche

1. Computerumgesetztes Verfahren zum Trainieren eines künstlichen neuronalen Netzes (300), umfassend mehrere Knoten (301), die jeweils eine quantisierte Aktivierungsfunktion (303) definieren, die dazu konfiguriert ist, einen quantisierten Aktivierungswert (305) auszugeben, wobei die Knoten in mehreren Schichten angeordnet sind, in denen Knoten in benachbarten Schichten durch Verbindungen (309) verbunden sind, die jeweils eine quantisierte Verbindungsgewichtsfunktion (311) definieren, die dazu konfiguriert ist, einen quantisierten Verbindungsgewichtswert (313) auszugeben, wobei das Verfahren Folgendes umfasst:

   Minimieren einer Verlustfunktion (317), wobei die Verlustfunktion einen skalierbaren Regularisierungsfaktor (319) umfasst, der durch eine differenzierbare periodische Funktion (321) definiert ist, die dazu konfiguriert ist, eine endliche Anzahl an Minima bereitzustellen, die basierend auf einem Quantisierungsschema für das neuronale Netz ausgewählt werden, wodurch jeder Verbindungsgewichtswert auf einen einer vorbestimmten Anzahl an Werten des Quantisierungsschemas zu beschränken ist;
   wobei das Minimieren einer Verlustfunktion (317) Folgendes umfasst:

      unter Verwendung der Verlustfunktion (317), Beschränken jedes quantisierten Aktivierungswerts (305) auf einen einer vorbestimmten Anzahl an Werten des Quantisierungsschemas; und

Abstimmen jedes quantisierten Verbindungsgewichtswerts (313); und

Minimieren (315) der Verlustfunktion (317) unter Verwendung eines Gradientenabstiegsmechanismus; wobei die Quantisierungsparameter Skalierungsfaktoren für die Aktivierungen und Skalierungsfaktoren für die Gewichte umfassen, wobei die Skalierungsfaktoren für die Gewichte unter Verwendung eines aktuellen maximalen Absolutwerts der Gewichte initialisiert werden,

wobei jedes der Minima der periodischen Funktion (321) mit einem Wert des Quantisierungsschemas zusammenfällt und

wobei das Quantisierungsschema eine Anzahl an ganzzahligen Bits definiert.

2. Nichttransitorisches maschinenlesbares Speichermedium, das mit Anweisungen (430) zum Trainieren eines künstlichen neuronalen Netzes (300) codiert ist, wobei die Anweisungen, wenn sie durch einen Prozessor (410) einer Maschine (400) ausgeführt werden, die Maschine (400) dazu veranlassen, ein Verfahren nach Anspruch 1 durchzuführen.

3. Computerprogrammprodukt, umfassend Anweisungen (430) zum Trainieren eines künstlichen neuronalen Netzes (300), die, wenn das Programm durch einen Computer ausgeführt wird, den Computer dazu veranlassen, die Schritte des Verfahrens nach Anspruch 1 durchzuführen.

4. Datenverarbeitungsvorrichtung, umfassend einen Prozessor, der dazu konfiguriert ist, die Schritte des Verfahrens nach Anspruch 1 durchzuführen.

**Revendications**

1. Procédé mis en œuvre par ordinateur pour l'entraînement d'un réseau neuronal artificiel (300) comprenant plusieurs nœuds (301) définissant chacun une fonction d'activation quantifiée (303) configurée pour produire en sortie une valeur d'activation quantifiée (305), les nœuds étant disposés en plusieurs couches, dans lesquelles les nœuds dans les couches adjacentes sont connectés par des connexions (309) définissant chacune une fonction de pondération de connexion quantifiée (311) configurée pour produire en sortie une valeur de pondération de connexion quantifiée (313), le procédé comprenant :

la minimisation d'une fonction de perte (317), la fonction de perte comprenant un facteur de régularisation évolutif (319) défini par une fonction périodique différentiable (321) configurée pour fournir un nombre fini de minima sélectionnés sur la base d'un schéma de quantification pour le réseau neuronal, afin de contraindre chaque valeur de pondération de connexion à l'un d'un nombre prédéterminé de valeurs du schéma de quantification ; dans lequel la minimisation d'une fonction de perte (317) comprend :

à l'aide de la fonction de perte (317), le fait de contraindre chaque valeur d'activation quantifiée (305) à l'un d'un nombre prédéterminé de valeurs du schéma de quantification ; et

le réglage de chaque valeur de pondération de connexion quantifiée (313) ; et

la minimisation (315) de la fonction de perte (317) à l'aide d'un mécanisme de descente de gradient ; dans lequel les paramètres de quantification comprennent des facteurs d'échelle pour les activations et des facteurs d'échelle pour les pondérations,

dans lequel les facteurs d'échelle pour les pondérations sont initialisés à l'aide de la valeur absolue maximale actuelle des pondérations,

dans lequel chacun des minima de la fonction périodique (321) coïncide avec une valeur du schéma de quantification, et

dans lequel le schéma de quantification définit un nombre de bits entiers.

2. Support de stockage non transitoire lisible par machine codé avec des instructions (430) pour l'entraînement d'un réseau neuronal artificiel (300), les instructions, lorsqu'elles sont exécutées par un processeur (410) d'une machine (400), amènent la machine (400) à réaliser un procédé selon la revendication 1.

3. Produit de programme informatique comprenant des instructions (430) pour l'entraînement d'un réseau neuronal artificiel (300) qui, lorsque le programme est exécuté par un ordinateur, amènent l'ordinateur à mettre en œuvre les étapes du procédé selon la revendication 1.

4. Dispositif de traitement de données comprenant un processeur configuré pour réaliser les étapes du procédé selon la

revendication 1.

EP 4 150 531 B1

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- SinReQ: Generalized Sinusoidal Regularization for Low-Bitwidth Deep Quantized Training. **AHMED T ELTHAKEB et al.** arXiv.org. Cornell University Library, 04 May 2019